# EUROPEAN PATENT APPLICATION

(11) **EP 4 804 036 A1**
(43) Date of publication of application: **09.09.2026**
(21) Application number: 26160615.6
(22) Date of filing: 25.02.2026
(51) Int. Cl.: G06F 12/06, G06F 9/44, G06F 21/62, H04L 47/34, H04L 49/25

(54) **SYSTEMS AND METHODS FOR A MEMORY GROUP ARCHITECTURE**

(30) Priority: 04.03.2025 US 202563766646 P; 22.08.2025 US 202519308161
(71) Applicant: Samsung Electronics Co., Ltd., Suwon-si, Gyeonggi-do 16677 (KR)
(72) Inventor: KI, Yang Seok, San Jose, CA, 95134 (US); JUNG, Myung June, San Jose, CA, 95134 (US)
(74) Representative: Kuhnen & Wacker Patent- und Rechtsanwaltsbüro PartG mbB

(57) **Abstract**

Provided are systems and methods for providing a memory group. The system includes a first memory device (MD1) associated with a first host (H1), the first memory device (MD1) including a first memory (LM1), at least a first portion of the first memory (LM1) being a first shared memory (LMA1) that is configured to receive a first transaction request associated with a first data operation, the first transaction request from outside of the first host (H1), a first local-memory manager (LMM1) configured to manage the first shared memory (LMA1), and a first access gateway (AG1) of the first memory device (MD1), the first access gateway (AG1) configured to determine, based on a first data structure of the first memory device (MD1), to route the first transaction request to the first shared memory (LMA1).

## Description

### FIELD

One or more aspects of embodiments according to the present disclosure relate to computing systems, and more particularly to systems and methods for providing a memory group.

### BACKGROUND

In the field of computers, a computing system may include one or more hosts and one or more memory devices connected to (e.g., communicatively coupled to) the one or more hosts. Such computing systems have become increasingly popular, in part, for allowing many different users to share the computing resources of the system. Memory requirements have increased over time as the number of users of such systems and the number and complexity of applications running on such systems have increased.

The present background section is intended to provide context only, and the disclosure of any embodiment or concept in this section does not constitute an admission that said embodiment or concept is prior art.

### SUMMARY

Aspects of some embodiments of the present disclosure are directed to computing systems for improved data access management.

According to some embodiments of the present disclosure, there is provided a system for providing a first memory group, the system including a first memory device associated with a first host, the first memory device including a first memory, at least a first portion of the first memory being a first shared memory that is configured to receive a first transaction request associated with a first data operation, the first transaction request from outside of the first host, a first local-memory manager configured to manage the first shared memory, and a first access gateway of the first memory device, the first access gateway configured to determine, based on a first data structure of the first memory device, to route the first transaction request to the first shared memory.

The first data structure may include a memory routing table including shared-memory location information indicating a first location within the first shared memory corresponding to the first transaction request.

The first local-memory manager may manage the first shared memory by dividing the first memory to generate the first shared memory, and generating first shared-memory information indicating one or more performance attributes of the first shared memory.

The system may further include a global manager communicatively connected to the first access gateway and to a second access gateway of a second memory device associated with a second host, wherein the global manager is configured to create the first memory group including the first shared memory and a second shared memory of the second memory device.

The global manager may be configured to create the first memory group based on one or more performance attributes of the first shared memory or based on one or more performance attributes of a second shared memory.

The first local-memory manager may be configured to determine one or more performance attributes of the first shared memory and to determine one or more performance attributes of a second shared memory of a second memory device of a second host, and store the one or more performance attributes of the first shared memory and the one or more performance attributes of the second shared memory in a second data structure on the first memory device.

The first transaction request may be configured to operate using an interconnect protocol.

The first access gateway may include a first port configured to receive the first transaction request, and a second port configured to receive a second transaction request.

The first port may be configured to receive a first participation request to provide the first shared memory to the first memory group.

According to some other embodiments of the present disclosure, there is provided a method for providing a first memory group, the method including dividing, by a first local-memory manager of a first memory device of a first host, a first memory of the first host to generate a first shared memory of the first memory device, receiving, by a first access gateway of the first memory device, a first transaction request to perform a first data operation on the first shared memory, the first transaction request from outside of the first host, and determining, by the first access gateway, based on a first data structure of the first memory device, to route the first transaction request to the first shared memory.

The first data structure may include a memory routing table including shared-memory location information indicating a first location within the first shared memory corresponding to the first transaction request.

The method may further include generating, by the first local-memory manager, first shared-memory information indicating one or more performance attributes of the first shared memory.

The method may further include creating, by a global manager communicatively connected to the first access gateway and to a second access gateway of a second memory device associated with a second host, the first memory group, the first memory group including the first shared memory and a second shared memory of the second memory device.

The global manager may be configured to create the first memory group based on one or more performance attributes of the first shared memory or based on one or more performance attributes of a second shared memory.

The first local-memory manager may be configured to determine one or more performance attributes of the first shared memory and to determine one or more performance attributes of a second shared memory of a second memory device of a second host, and store the one or more performance attributes of the first shared memory and the one or more performance attributes of the second shared memory in a second data structure.

The first transaction request may be configured to operate using an interconnect protocol.

The first access gateway may include a first port configured to receive the first transaction request, and a second port configured to receive a second transaction request from the first host.

The first port may be configured to receive a first participation request to provide the first shared memory to the first memory group.

According to some other embodiments of the present disclosure, there is provided a method for providing a first memory group, the method including receiving, by a first access gateway of a first memory device of a first host, a first participation request to provide one or more memory portions, from a first memory of the first memory device, to a first shared memory of the first memory group, the first participation request indicating one or more performance attributes for the first shared memory, determining, by a first local-memory manager of the first memory device, that a first portion of the first memory satisfies the one or more performance attributes for the first shared memory, and creating, by the first local-memory manager, the first shared memory from the first portion of the first memory.

The method may further include receiving, by the first access gateway of the first memory device, a first transaction request from outside of the first host, determining, by the first local-memory manager, a first performance attribute of the first shared memory based on the first transaction request, and transmitting, by the first access gateway from a first port of the first memory device, first shared-memory information indicating the first performance attribute.

### BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified.
FIG. 1A is a block diagram depicting a system for providing a memory pool, according to some embodiments of the present disclosure.
FIG. 1B is a block diagram depicting components of a memory device in the system of FIG. 1A, according to some embodiments of the present disclosure.
FIG. 1C is a block diagram depicting components of a global manager of the system of FIG. 1A, according to some embodiments of the present disclosure.
FIG. 2A is a block diagram depicting a virtual pool-of-memory (VPoM) instance created from donated memory regions (DMRs) of the system of FIG. 1A, according to some embodiments of the present disclosure.
FIG. 2B is a diagram indicating example VPoM address spaces, in terms of host physical addresses (HPA), before and after creating a VPoM instance, according to some embodiments of the present disclosure.
FIG. 3 is a diagram depicting a VPoM address map table with per-DMR performance attributes, according to some embodiments of the present disclosure.
FIGS. 4A, 4B, and 4C (collectively, FIG. 4) are diagrams depicting a method for creating a VPoM instance, according to some embodiments of the present disclosure.
FIG. 5 is a diagram depicting a method for providing a memory pool, according to some embodiments of the present disclosure.

Corresponding reference characters indicate corresponding components throughout the several views of the drawings. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

### DETAILED DESCRIPTION

Aspects of the present disclosure and methods of accomplishing the same may be understood more readily by reference to the detailed description of one or more embodiments and the accompanying drawings. Hereinafter, embodiments will be described in more detail with reference to the accompanying drawings. The described embodiments, however, may be embodied in various different forms, and should not be construed as being limited to only the illustrated embodiments herein. Rather, these embodiments are provided as examples so that this disclosure will be thorough and complete, and will fully convey aspects of the present disclosure to those skilled in the art. Accordingly, description of processes, elements, and techniques that are not necessary to those having ordinary skill in the art for a complete understanding of the aspects and features of the present disclosure may be omitted.

Unless otherwise noted, like reference numerals, characters, or combinations thereof denote like elements throughout the attached drawings and the written description, and thus, descriptions thereof will not be repeated. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

In the detailed description, for the purposes of explanation, numerous specific details are set forth to provide a thorough understanding of various embodiments. It is apparent, however, that various embodiments may be practiced without these specific details or with one or more equivalent arrangements.

It will be understood that, although the terms "zeroth," "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or component is referred to as being "on," "connected to," or "coupled to" another element or component, it can be directly on, connected to, or coupled to the other element or component, or one or more intervening elements or components may be present. However, "directly connected/directly coupled" refers to one component directly connecting or coupling another component without an intermediate component. Meanwhile, other expressions describing relationships between components such as "between," "immediately between" or "adjacent to" and "directly adjacent to" may be construed similarly. In addition, it will also be understood that when an element or component is referred to as being "between" two elements or components, it can be the only element or component between the two elements or components, or one or more intervening elements or components may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, each of the terms "or" and "and/or" includes any and all combinations of one or more of the associated listed items. For example, the expression "A and/or B" denotes A, B, or A and B.

For the purposes of this disclosure, expressions such as "at least one of," when preceding a list of elements, modify the entire list of elements and do not modify the individual elements of the list. For example, "at least one of X, Y, or Z," "at least one of X, Y, and Z," and "at least one selected from the group consisting of X, Y, and Z" may be construed as X only, Y only, Z only, or any combination of two or more of X, Y, and Z, such as, for instance, XYZ, XYY, YZ, and ZZ.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

When one or more embodiments may be implemented differently, a specific process order may be performed differently from the described order. For example, two consecutively described processes may be performed substantially at the same time or performed in an order opposite to the described order.

Any of the components or any combination of the components described (e.g., in any system diagrams included herein) may be used to perform one or more of the operations of any flow chart included herein. Further, (i) the operations are merely examples, and may involve various additional operations not explicitly covered, and (ii) the temporal order of the operations may be varied.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Any of the functionalities described herein, including any of the functionalities that may be implemented with a host, a device, and/or the like or a combination thereof, may be implemented with hardware, software, firmware, or any combination thereof including, for example, hardware and/or software combinational logic, sequential logic, timers, counters, registers, state machines, volatile memories such as dynamic RAM (DRAM) and/or static RAM (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application-specific ICs (ASICs), central processing units (CPUs) including complex instruction set computer (CISC) processors and/or reduced instruction set computer (RISC) processors, graphics processing units (GPUs), neural processing units (NPUs), tensor processing units (TPUs), data processing units (DPUs), and/or the like, executing instructions stored in any type of memory. In some embodiments, one or more components may be implemented as a system-on-a-chip (SoC).

Any of the computational devices disclosed herein may be implemented in any form factor, such as 3.5 inch, 2.5 inch, 1.8 inch, M.2, Enterprise and Data Center Standard Form Factor (EDSFF), NF1, and/or the like, using any connector configuration such as Serial Advanced Technology Attachment (SATA), Small Computer System Interface (SCSI), Serial Attached SCSI (SAS), U.2, and/or the like. Any of the computational devices disclosed herein may be implemented entirely or partially with, and/or used in connection with, a server chassis, server rack, data room, data center, edge data center, mobile edge data center, and/or any combinations thereof.

Any of the devices disclosed herein that may be implemented as storage devices may be implemented with any type of nonvolatile storage media based on solid-state media, magnetic media, optical media, and/or the like. For example, in some embodiments, a storage device (e.g., a computational storage device) may be implemented as an SSD based on not-AND (NAND) flash memory, persistent memory such as cross-gridded nonvolatile memory, memory with bulk resistance change, PCM, and/or the like, or any combination thereof.

Any of the communication connections and/or communication interfaces disclosed herein may be implemented with one or more interconnects, one or more networks, a network of networks (e.g., the Internet), and/or the like, or a combination thereof, using any type of interface and/or protocol. Examples include Peripheral Component Interconnect Express (PCle), non-volatile memory express (NVMe), NVMe-over-fabric (NVMe-oF), Ethernet, Transmission Control Protocol/Internet Protocol (TCP/IP), Direct Memory Access (DMA) Remote DMA (RDMA), RDMA over Converged Ethernet (ROCE), FibreChannel, InfiniBand, SATA, SCSI, SAS, Internet Wide Area RDMA Protocol (iWARP), and/or a coherent protocol, such as Compute Express Link (CXL), CXL.mem, CXL.cache, CXL.IO and/or the like, Gen-Z, Open Coherent Accelerator Processor Interface (OpenCAPI), Cache Coherent Interconnect for Accelerators (CCIX), and/or the like, Advanced eXtensible Interface (AXI), any generation of wireless network including 2G, 3G, 4G, 5G, 6G, and/or the like, any generation of Wi-Fi, Bluetooth, near-field communication (NFC), and/or the like, or any combination thereof.

In some embodiments, a software stack may include a communication layer that may implement one or more communication interfaces, protocols, and/or the like such as PCle, NVMe, CXL, Ethernet, NVMe-oF, TCP/IP, and/or the like, to enable a host and/or an application running on the host to communicate with a computational device or a storage device.

Each of the terms "processing circuit" and "means for processing" is used herein to mean any suitable combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hardwired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As mentioned above, in the field of computers, a computing system may include one or more hosts and one or more memory devices connected to (e.g., communicatively coupled to) the one or more hosts. For example, a data center may perform data access management to provide computing resources of one or more hosts and/or one or more memory devices to users. The computing resources may be provided based on a plurality of interconnected nodes in the computing systems. Such systems may be used in large-scale high-performance computing systems, including inferencing systems and/or training systems for large language models, and/or mixture of expert systems.

In some systems, an approach that utilizes only locally attached memory per memory group (e.g., per memory pool) may create siloed memories, which may cause a problem where portions of memory are underutilized (e.g., based on being stranded from other portions of memory). This problem, which is also referred to as a stranded memory problem (also referred to as a silo problem), may result in memory (e.g., portions of memory) being underutilized and/or not enough memory being utilized to provide a suitable memory pool (e.g., a suitable memory group). As used herein, a "memory pool" (also referred to as a memory group) refers to memory that that is made accessible to one or more nodes and may be built (e.g., created) using portions of memory associated with one or more different nodes. For example, a memory pool may be a resource pool (e.g., a pool of memory resources), which can provide any suitable combination of selected resources from among a set of resources (e.g., from among a full set of resources).

In some systems, an approach that utilizes disaggregated memory for a memory pool may result in relatively long latencies (compared to local memory access) all the time when accessing the disaggregated memory because the disaggregated memory pool exists outside of a local compute node over a network (e.g., over an interconnect). In some systems, performance bottlenecks may occur, in part, due to nodes (e.g., any device that can initiate memory access, such as hosts and/or memory devices) sending data-change notifications to every node in the system, when data on a given node is changed, to allow for memory coherence across the system.

Aspects of some embodiments of the present disclosure provide for systems and methods for providing memory pools with shorter latencies (e.g., similar to latencies associated with local access) when the data is located in a memory pool that is actually in a local memory area.

Aspects of some embodiments of the present disclosure provide for systems and methods with improved performance (e.g., improved data access) and improved data coherence based on enabling memory pools (e.g., VPoMs), also referred to as memory groups, to be built with memory associated with different hosts (e.g., donated to a given memory pool by different hosts). As used herein, the term "donate" refers to a first node (e.g., a first host) that is associated with a first memory making at least a portion of the first memory available for use in a memory pool that is accessible to the first node and to a second node that is associated with a second memory that is different from the first memory. For example, the first node may donate (e.g., may assign or may provide) a first portion of the first memory to a first memory pool, the first memory pool being accessible to one or more other nodes, in addition to being accessible to the first node. In some embodiments, the memory pools may be built with donated memory (e.g., DMRs), by including an access gateway, a local memory manager, and one or more interconnect-protocol ports (e.g., CXL ports) in locally attached memory modules (e.g., in locally attached CXL memory modules (CMMs)) and by utilizing a global manager to coordinate the building of memory pools and to coordinate the testing (e.g., testing at a training stage of memory-pool creation) of the memory pools. As used herein, an "interconnect protocol" refers to a protocol for interconnecting multiple nodes (e.g., hosts and memory devices) together for communicating data packets and control information between the nodes. For example, CXL may be one example of an interconnect protocol. In some embodiments, the interconnect protocol may include (e.g., may be) Gen-Z protocol, cache-coherent-interconnect-for-accelerators (CCIX) protocol, NVLink protocol, modified-shared-invalid (MSI) protocol, modified-exclusive-shared-invalid (MESI) protocol, modified-owned-exclusive-shared-invalid (MOESI) protocol, modified-exclusive-shared-invalid-forward (MESIF) protocol, and/or the like. In some embodiments, the interconnect protocol (e.g., CXL) provides options to control (e.g., the interconnect protocol enables control of) cache coherence among nodes. That is, the system (e.g., components of the system) may operate using one or more interconnect protocols. In some embodiments, one or more of the nodes may include (e.g., may be) a CPU, an accelerator (such as a GPU, an NPU, an FPGA, and/or the like), memory devices, and/or the like.

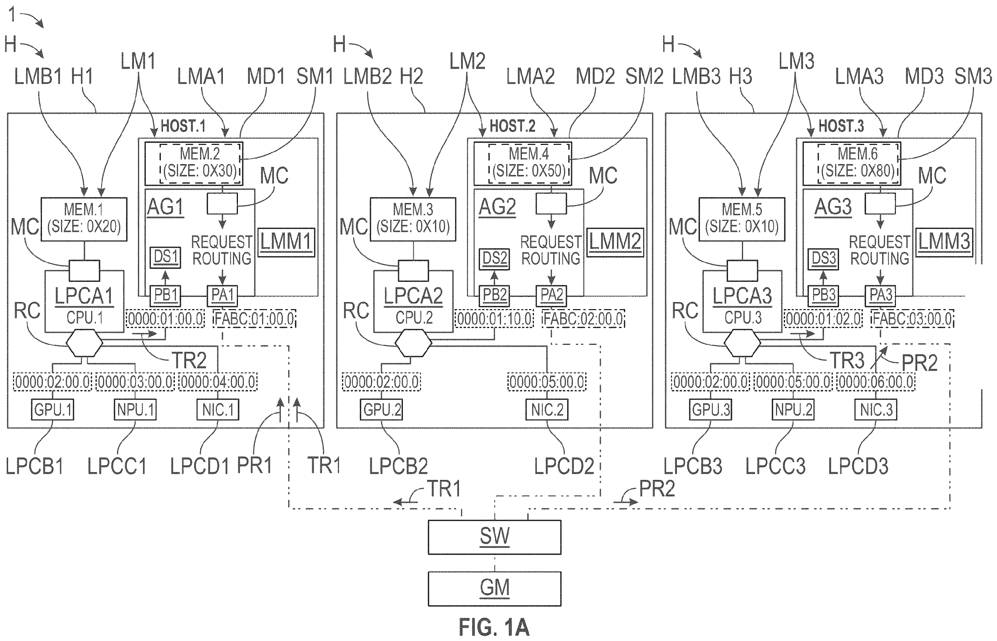

FIG. 1A is a block diagram depicting a system 1 for providing a memory pool, according to some embodiments of the present disclosure.

Referring to FIG. 1A, the system 1 may include one or more hosts H (e.g., hosts H1, H2, and H3). As used herein, the figures (e.g., FIGS. 1A to 2B) include reference names including one or more letters followed by a specific number. In such cases, the numbers are intended to distinguish between specific instances of a given type of element depicted in the figures. The present disclosure refers to a given type of element without a specific number to describe that type of element generally. For example, the host H could refer to any given host, while the host H1 (or the first host H1) refers to a specific host depicted in the figures. The system 1 may include a global manager GM communicatively connected to the hosts H. In some embodiments, the global manager GM may be connected to the hosts via a switch SW (e.g., a network switch, such as a CXL switch, a PCle switch, or an Ethernet switch). In some embodiments, the global manager GM may be a component of one or more hosts. In some embodiments, a system may include multiple global managers GM (e.g., multiple replicated global managers GM) to avoid a single point of failure.

In some embodiments, each host H may include a local memory LM that is associated with (e.g., that is local to) a given host H. The local memory LM may include a memory-device local memory LMA (e.g., a shareable portion of the local memory LM) and may include a reserved local memory LMB (e.g., a non-shareable portion of the local memory LM). For example, the memory-device local memory LMA may be available for creating one or more memory pools with, or without, other memory-device local memories LMA of other hosts H. The reserved local memory LMB may be reserved for use by only the local host H. For example, a first reserved local memory LMB1 may be reserved for use by only the first host H1. As discussed in further detail below, the memory-device local memory LMA may be partitioned (e.g., divided or split up) to generate one or more shared memories (e.g., a first shared memory SM1). The first shared memory SM1 may also be referred to as a first donated memory region (e.g., DMR1). The shared memory SM may be accessible to data operations associated with transaction requests TR originating from outside the local host H. That is, at least a first portion of a given local memory LM (e.g., LM1) may be a given shared memory (e.g., SM1) that is configured to receive a given transaction request (e.g., TR1) associated with a first data operation (e.g., a read operation or a write operation), the given transaction request (e.g., TR1) originating from outside of a given host (e.g., outside of H1). For example, the first shared memory SM1 may be accessible to a data operation associated with a first transaction request TR1 originating from the second host H2 or from the third host H3.

In some embodiments, the memory-device local memory LMA may be associated with (e.g., may correspond to) a given memory device MD. For example, a first memory-device local memory LMA1 may be associated with a first memory device MD1 on the first host H1. The memory device MD may be associated with (e.g., may include) an access gateway AG and associated with a local memory manager LMM. For example, a first memory device MD1 may be associated with a first access gateway AG1 and with a first local memory manager LMM1. The memory device MD may be associated with a first port PA (e.g., a first port associated with an in-band channel) and with a second port PB (e.g., a second port associated with the in-band channel). In some embodiments, the first port PA may handle communications (e.g., transaction requests and/or participation requests PR) from the other hosts H, the global manger GM, and/or the switch SW. In some embodiments, the second port PB may handle communications (e.g., transaction requests) from one or more local processing circuits LPC (e.g., a first local processing circuit LPCA, a second local processing circuit LPCB, a third local processing circuit LPCC, a fourth local processing circuit LPCD, etc.). The local processing circuits LPC may include one or more of a CPU, a GPU, an NPU, a network interface card (NIC), and/or the like. In some embodiments, one or more local processing circuits LPC may receive and/or transmit messages (e.g., transaction requests TR) via a root complex RC and may communicate with the reserved local memory LMB via a memory controller MC. The root complex RC may provide a bridge (e.g., a link) between a local processing circuit (e.g., the first local processing circuit LPCA, such as a CPU) and the rest of the PCle and/or CXL devices in the system 1. The root complex RC may handle tasks such as bus enumeration, address forwarding, and transaction management.

Although the drawings depict arrows related to certain elements (e.g., DS1, PB1, PA1, PR1, TR1, etc.), it should be understood that the directions of the arrows are provided only as non-limiting examples, and the present disclosure is not limited to the depicted directions. For example, an arrow indicating a direction of travel for a signal path between the memory controller MC toward the first port PA1 does not mean that a given signal may not travel from the first port PA1 toward the memory controller MC.

In some embodiments, the access gateway AG may utilize one or more data structures DS to perform one or more functions, including: data routing (e.g., local packet routing and/or remote packet routing), coherence management, data prefetching, and/or stream processing to enhance the performance of memory transactions.

In some embodiments, a given local-memory manager LMM may manage a corresponding shared memory SM on the same given host H. For example, a first local memory manager LMM1 may manage the first shared memory SM1 on the first host H1. In some embodiments, the local-memory manager LMM may partition (e.g., may divide) a corresponding local memory LM to create and to donate (e.g., to create and assign) memory regions (e.g., shared memories SM) to build one or more VPoM instances. In some embodiments, the local-memory manager LMM may test for (e.g., may train) performance attributes of the shared memories SM (e.g., of the remote shared memories SM). That is, the local-memory manager LMM may determine performance attributes of the shared memories SM. For example, the first local-memory manager LMM1 may test for one or more performance attributes such as latency, bandwidth, capacity, throughput, and/or the like based on transaction requests TR originating from the second host H2 and/or the third host H3. In some embodiments, the local-memory manager LMM may generate and/or collect shared-memory information indicating one or more performance attributes of one or more shared memories SM for storing in a given data structure DS and/or transmitting to the global manager GM in coordinating the building of a given memory pool.

In some embodiments, the global manager GM may coordinate the building of memory-pool instances in the system 1. In some embodiments, the global manager GM may coordinate the testing of (e.g., the training of) performance attributes of the memory-pool instances in the system 1. The global manager GM may serve as a global coordinator for VPoM instance creation and other management activities (e.g., other management operations).

As an example of some of the operations of system 1, and still referring to FIG. 1A, the global manager GM may determine to create a memory pool to meet given performance attributes (e.g., to meet given latency, bandwidth, throughput, and/or capacity attributes). The global manager GM may send participation requests PR to one or more of the hosts H1 to H3. For example, the global manager GM may send a first participation request PR1 to the first host H1 and may send a second participation request PR2 to the third host H3.

The first access gateway AG1 may receive the first participation request PR1 and a third access gateway AG3 may receive the second participation request PR2. The participation requests PR may include information for determining whether memory resources qualify to meet the performance attributes for the memory pool. The first local-memory manager LMM1 may determine that memory resources of the first memory-device local memory LMA1 may be used to meet the performance attributes and may partition the first memory-device local memory LMA1 into the first shared memory SM1 and donate the first shared memory SM1 to the memory pool. Likewise, a third local-memory manager LMM3 may partition a third memory-device local memory LMA3 into a third shared memory SM3 and donate the third shared memory SM3 to the memory pool. Accordingly, the global manger GM may coordinate with the local-memory mangers LMM to create a pool of memory composed of shared memories SM from different hosts H (e.g., from different memory devices MD of the different hosts H).

In some embodiments, the global manager GM and the local-memory managers LMM may coordinate to test for the performance attributes of the shared memories SM. For example, the local memory managers LMM may send shared-memory information indicating one or more performance attributes of their respective shared memories to the global manager GM. In some embodiments, the global manager GM may coordinate the testing of performance attributes. For example, the global manager GM may coordinate a sending of test transaction requests TR between the hosts in order to determine latencies associated with the test transaction requests TR.

In some embodiments, access gateways AG may perform routing of transaction requests and/or participation requests. In some embodiments, the access gateways AG may utilize one or more data structures DS to perform a variety of functions associated with the transaction requests (e.g., functions such as routing memory requests, managing coherence, managing prefetch requests, and performing stream processing operations). For example, the first access gateway AG1 may receive the first transaction request TR1, which originated from outside of the first host H1. The first access gateway AG1 may refer to the first data structure DS1 to determine whether the first transaction request TR1 should be forwarded (e.g., rerouted) to a different host H (e.g., the second host H2 or the third host H3) or processed by the first shared memory SM1. For example, the first access gateway AG1 may route the first transaction request TR1 to the first shared memory SM1. The routing of the first transaction request TR1 to the first shared memory SM1 may cause a data operation (e.g., a read operation or a write operation) associated with the first transaction request TR1 to be performed on the first shared memory SM1.

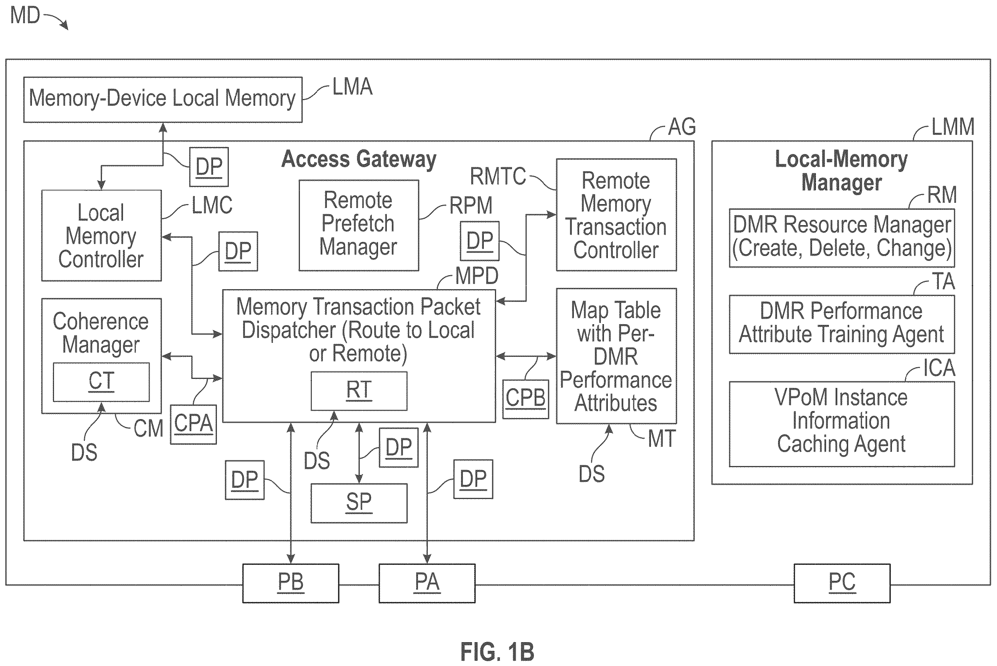

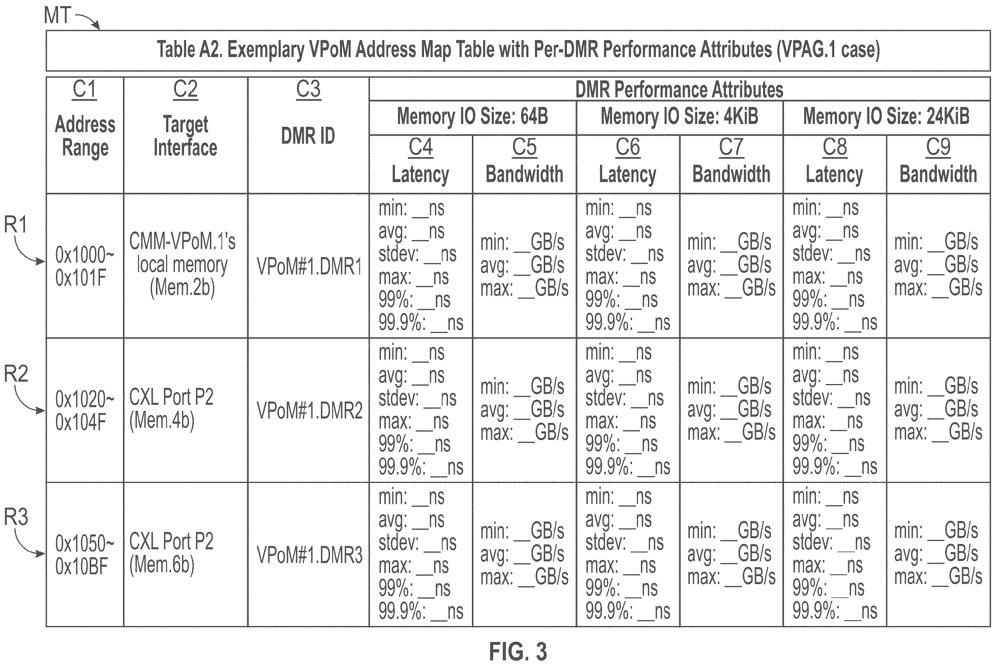

In some embodiments, the access gateway AG may add records (e.g., entries) to one or more data structures DS for performing coherence managing, data prefetching, and/or stream processing to enhance the performance of memory transactions. For example, and as discussed in further detail below, the data structures DS may include a coherence table CT, a routing table, and/or a map table MT (see, e.g., FIG. 1B). One or more of the data structures may include a header, a body, and metadata for tracking memory usage in the system 1 (see, e.g., FIGS. 1A, 1B, and 3). In some embodiments, the access gateway AG may perform routing of read/write transaction requests and/or routing of read/write transaction response routing, coherence managing, stream processing, and/or prefetching. In some embodiments, the access gateway AG may add or modify the data structures of memory transaction packets.

Still referring to FIG. 1A, each host H may have its local memory LM (e.g., 'Mem.1' in the case of 'Host.1'). For example, Mem.1 may correspond to the first reserved local memory LMB1. In some embodiments, the first reserved local memory LMB1 may be equipped on local dual in-line memory-module (DIMM) slots. Each host H may also have at least one memory device MD (e.g., at least one CXL Memory Module for VPoM (CMM-VPoM)). In some embodiments, the memory device MD may have a local memory manager LMM (e.g., a VPoM Local Manager (VPoM.LM)), an access gate AG (e.g., a Virtual Pool Access Gateway (VPAG)), memory-device local memory LMA (e.g., 'Mem.2' in the case of 'Host.1'), and (at least) two ports (e.g., CXL ports) (e.g., PA and PB). In some embodiments, one of the two ports of memory device MD is connected to the local host, and the other port is connected to the switch SW (e.g., the CXL switch).

In some embodiments, the local-memory manger LMM (e.g., VPoM.LM) manages the partition and donation of the memory-device local memory LMA (e.g., CMM-VPoM local memory) ('Mem.2' in case of 'Host.1'). The local-memory manager LMM may create, delete, and/or change the partition of memory-device local memory LMA based on an administrator's configuration information or based on a predefined master default configuration (e.g., "50% of capacity (lower half of CMM-VPoM local memory's address range) will be used for local host use, 50% of capacity (higher half (e.g., upper half) of CMM-VPoM local memory's address range) will be donated for VPoM"). In some embodiments, the local-memory manager LMM (e.g., VPoM.LM) can determine (e.g., can decide) one or more partitions of the memory device MD (e.g., CMM-VPoM local memory) to be donated for a VPoM instance. A donated CMM-VPoM memory partition may be referred to as a DMR. A VPoM instance can be viewed as a virtual set of DMRs from participating memory devices MD (e.g., participating CMM-VPoMs). The local-memory manager LMM (e.g., VPoM.LM) may interact with the global manager GM (e.g., VPoM.GM) to provide information related to the DMR, so that the global manager GM (e.g., VPoM.GM) can create, delete, and/or change the VPoM instance based on the information. In some embodiments, the local-memory manager LMM (e.g., VPoM.LM) collects DMR performance attribute information during the VPoM instance testing (e.g., training phase), as directed by the global manager GM (e.g., VPoM.GM).

In some embodiments, the access gateway AG (e.g., VPAG) performs a variety of roles in VPoM systems. Firstly, the access gateway AG (e.g., VPAG) may perform a memory access gateway role. Based on the target memory address of a memory transaction packet (e.g., a CXL memory transaction packet), the access gateway AG (e.g., VPAG) may forward the memory transaction packet to the memory-device local memory LMA (e.g., 'Mem.2' in case of 'Host.1'), or may forward it to the remote memory (e.g., 'Mem.4' or 'Mem.6', also referred to respectively as LMA2 and LMA3). In some embodiments, the access gateway AG (e.g., VPAG) processes the transaction requests TR (e.g., CXL memory read or write requests) received from the access gateways AGs (e.g., VPAGs) of other hosts H. Secondly, VPAG may perform a DMR performance attribute information provider role. For example, an access gateway AG (e.g., VPAG) may provide an operating system (OS) of a host H with the expected (e.g., trained) latency and bandwidth information of each local or remote memory module that constitutes a VPoM instance, so that the OS can use the VPoM instance properly considering performance characteristics of the memory devices MD. To perform these two roles, the access gateway AG (e.g., VPAG) may construct and maintain one or more data structures DS, including a memory request/response routing table (MRRT), and a memory proximity domain table (MPDT).

In some embodiments, the global manager GM (e.g., VPoM.GM) may coordinate one or more (e.g., all) of the VPoM-instance related management actions. These management actions may include creating, deleting, and/or changing VPoM instances, directing local memory managers LMMs (e.g., VPoM.LM) to perform DMR performance attribute training, configuring the switch SW (e.g., the CXL switch) for packet forwarding based on the memory address ranges and corresponding device map, and monitoring the health (e.g., the health status) of VPoM instances. That is, the global manager GM may manage the creation of memory pools (e.g., of memory groups) within the system 1, by creating (e.g., by causing the creation of) the memory pools.

As an overview of component details, the system 1 for providing a memory pool (e.g., a VPoM) may include the global manager GM and the memory device MD. The memory device MD may include an access gateway AG and a local memory manager LMM.

The access gateway AG may be characterized by having: (1) a memory transaction packet dispatcher MPD (see FIG. 1B), (2) a map table MT (e.g., a VPoM address map table) with per-DMR performance attributes, (3) a remote memory transaction controller RMTC, (4) a local memory controller LMC, (5) a coherence manager CM (e.g., a VPoM coherency manager), (6) a remote prefetch manager RPM (e.g., a remote memory data prefetch manager), and (7) a stream processor SP (e.g., a VPoM stream processor).

The local memory manager LMM may be characterized by having: (1) a DMR resource manager RM (see FIG. 1B) to create, delete, and/or change VPoM instances, (2) a DMR performance attribute training agent TA, and (3) a VPoM instance information caching agent ICA.

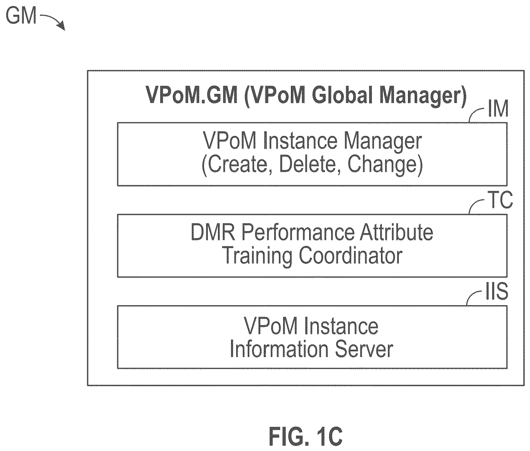

The global manager GM may be characterized by having: (1) a VPoM instance manager IM (see FIG. 1C) to create, delete, and/or change VPoM instances, (2) a DMR performance attribute training coordinator TC, and (3) a VPoM instance information server IIS.

FIG. 1B is a block diagram depicting components of a memory device in the system of FIG. 1A, according to some embodiments of the present disclosure.

Referring to FIG. 1B, and as discussed above, the memory device MD may include a memory-device local memory LMA that is accessible for use in a memory pool. The memory device MD may include the access gateway AG and the local-memory manager LMM.

The access gateway AG may include: the local memory controller LMC, the remote prefetch manager RPM, the remote memory transaction controller RMTC, the map table MT with per-DMR performance attributes (also referred to as a memory proximity domain table (MPDT)), a coherence manager CM (including a coherence table CT), and a memory transaction packet dispatcher MPD (including a routing table RT, which is also referred to as a memory request/response routing table (MRRT)). The map table MT, the coherence table CT, and the routing table RT may separately and/or collectively be referred to as the data structure DS. For example, the data structure DS may refer to one or more data structures (e.g., tables) even if one or more of the data structures have different formats.

In some embodiments, the first port PA and the second port PB may be used for routing transaction requests TR and participation requests PR. The ports may transmit data packets DP to the memory transaction packet dispatcher MPD for routing to local or remote memory-device components. For example, the memory transaction packet dispatcher MPD may forward data packets DP to the local memory controller LMC for causing data operations (e.g., read operations or write operations) to be performed on the memory-device local memory LMA. In other words, the local memory controller LMC may be the local memory controller for the memory-device local memory LMA. In some embodiments, the memory-device local memory LMA may include double-data rate (DDR) or low-power double data rate (LPDDR). The memory transaction packet dispatcher MPD may forward data packets DP to the remote memory transaction controller RMTC to redirect the data packets DP to remote memories. In some embodiments, the memory transaction packet dispatcher MPD may forward data packets DP to the stream processor SP for performing stream process operations.

In some embodiments, the memory transaction packet dispatcher MPD may transmit first control packets CPA to the coherence manager. For example, the memory transaction packet dispatcher MPD may collect information (e.g., coherence information, also referred to as coherence-control information) from the data packets DP and transmit the information to the coherence manager CM. For example, the coherence manager CM may make entries in the coherence table CT based on the information (e.g., the coherence-control information) collected from the data packets DP. In some embodiments, the coherence manager may determine whether to notify participating nodes regarding changes to data based on coherence-control information in the coherence table CT. In some embodiments, the memory transaction packet dispatcher MPD may transmit second control packets CPB to the map table MT with per-DMR performance attributes. For example, the control packets CPB may have a different format from the first control packets CPA and may include performance-attribute-related information for entering into the map table MT. The map table MT may include information for determining whether resources of the memory device MD may meet performance attributes for a given memory pool (e.g., a given VPoM instance).

The local-memory manager LMM may include: the DMR resource manager RM, the DMR performance attribute training agent TA, and the VPoM instance information caching agent ICA. In some embodiments, the memory device MD may include a third port PC associated with an out-of-band channel (e.g., a management-only channel).

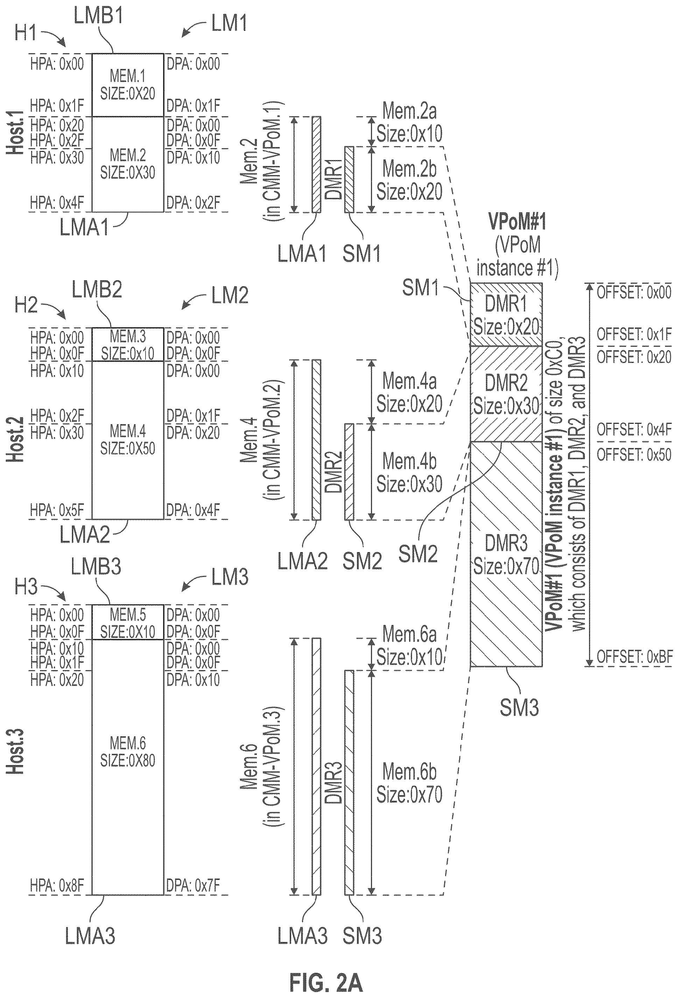

In some embodiments, as discussed in further detail below (e.g., see FIG. 2A), the DMR Resource Manager RM creates/deletes/changes the partition of the local memory LM. For example, in the case of CMM-VPoM.1, Mem.2 (e.g., LMA1) can be partitioned into Mem.2a and Mem.2b). The DMR resource manager RM may manage donation of the local memory partition to create the VPoM instance and may also manage withdrawal of the memory donated. If VPoM.LM (e.g., LMM1) determines (e.g., decides) to donate some partition of the memory (e.g., Mem.2b, also referred to as SM1), then this partition may be registered to the DMR list of the DMR resource manager, and then VPoM.LM (e.g., LMM1) may inform VPoM.GM (e.g., GM) about this donation. When there are any changes regarding the DMR, DMR resource manager RM may notify the VPoM.GM (e.g., GM) so that VPoM.GM can re-configure the related VPoM instances.

In some embodiments, the DMR performance attribute training agent TA may perform the test to evaluate the latency and throughput characteristics of remote memory (e.g., remote DMRs of the target VPoM instance). In some embodiments, the DMR performance attribute training agent TA may maintain a test case database (TCDB) for DMR performance attribute training. The test cases may be defined in a prescribed data format. In some embodiments, the DMR performance attribute training agent TA fetches and parses the test cases and executes them in the order specified. The DMR performance attribute training agent TA may convert the action specified in the test case to the CXL memory requests. In some embodiments, DMR performance attribute training agent TA generates the memory access requests, and handles the responses to them, to evaluate the performance characteristics and also to evaluate the error rates and error modes. These remote memory access requests and responses may be transmitted over CXL interconnect. In some embodiments, each DMR performance attribute training agent TA may have its operation sequence coordinated by VPoM.GM (e.g., by GM).

In some embodiments, VPoM instance information caching agent ICA manages the copy of information maintained by VPoM.GM (VPoM Global Manager) for quick access by VPAG (e.g., AG), such as current list of VPoM instances, memory transaction request routing table RT, per-DMR performance attributes, and/or the like. A VPoM information cache may allow for instance information to be communicated without the VPAG (e.g., the access gateway AG) traveling across (e.g., transmitting requests across) the network to the VPoM.GM whenever VPAG needs this information. In some embodiments, if any changes in a local DMR configuration or any faults occur in the local DMR, then the VPoM instance information caching agent ICA may inform the VPoM.GM (e.g., the global manager GM) about these events.

In some embodiments, VPAG (e.g., the access gateway AG) may include a special type of memory controller (e.g., remote memory transaction controller RMTC) to manage remote memory transactions. For efficient processing of memory transactions, VPAG (e.g., AG) may handle the memory transactions separately based on the transaction types such as bulk memory transaction, atomic memory transaction, and normal memory transaction. Memory transaction type may be specified explicitly by the host H or may be classified automatically by VPAG (e.g., AG).

Memory access requests may be classified as bulk memory transaction type when they are related with accessing large areas of memory spaces at a time. For example, a bulk memory transaction type may include one memory request to access a large amount of consecutive memory region, or more than one memory requests to access multiple memory regions. The criteria to classify a transaction as a bulk memory transaction may be specified by an on-site system administrator (e.g., a person) or may be provided as a default policy of VPoM.GM (e.g., of the global manager GM). In some embodiments, there may be an explicit tag denoting that the request can be handled as a bulk transaction. In the case of bulk memory transaction, a bulk memory transaction manager of the access gateway AG may split the request into multiple sub-requests so that the request can get the benefit of parallelism. In some embodiments, per-DMR performance parameter information may also be considered to determine the proper size of a stripe for parallelism.

In some embodiments, memory access requests may be classified as an atomic memory transaction type when there is a memory barrier (or fence) to enforce an ordering constraint on memory operations. In some embodiments, there may be an explicit tag denoting the group of requests should be (e.g., are expected to be) handled as an atomic transaction. In case of atomic memory transactions, an atomic memory transaction manager of the access gateway AG may create a separate queue for each atomic transaction if the address space range does not overlap among (e.g., does not overlap with) the atomic transaction requests, to avoid head-of-lock issues.

In some embodiments, memory access requests that were not classified as a bulk memory transaction type or as an atomic memory transaction type may be handled as a normal memory transaction type, and these memory requests may be handled separately from the bulk memory transaction type requests and the atomic memory transaction type requests. For example, a normal memory transaction manager may create a submission queue including completion queue pairs for as many as the number of target DMRs, to avoid any potential head-of-lock issues, if the remaining space for queues permits.

FIG. 1C is a block diagram depicting components of a global manager of the system of FIG. 1A, according to some embodiments of the present disclosure.

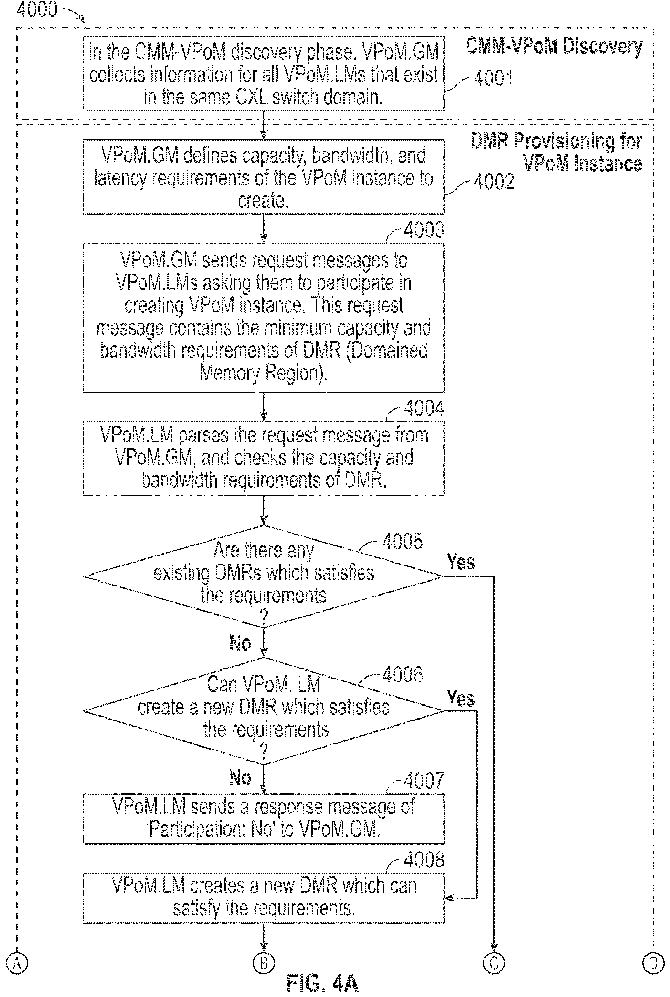

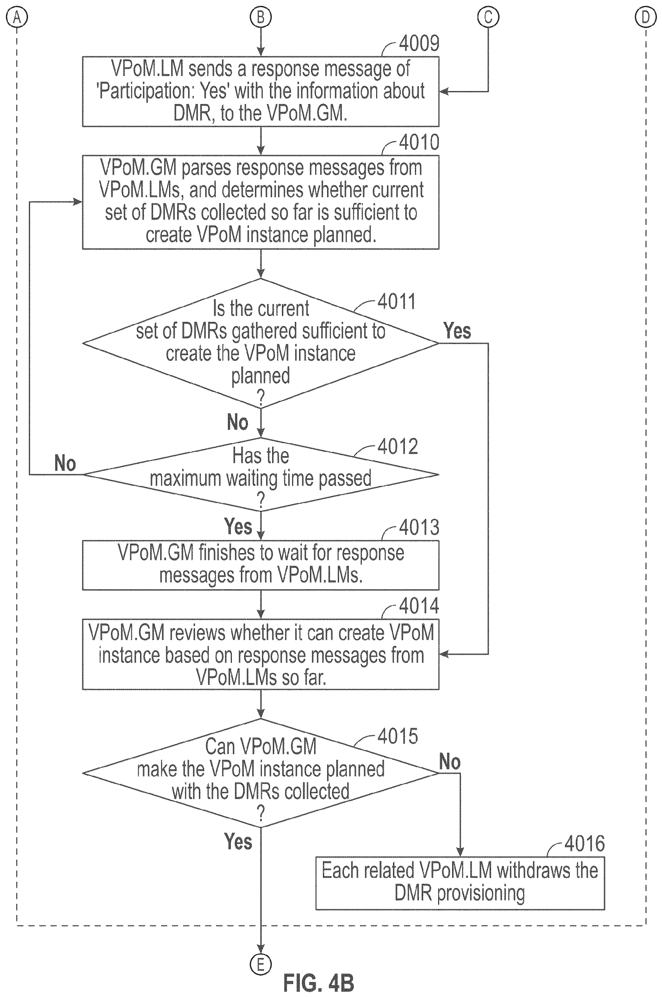

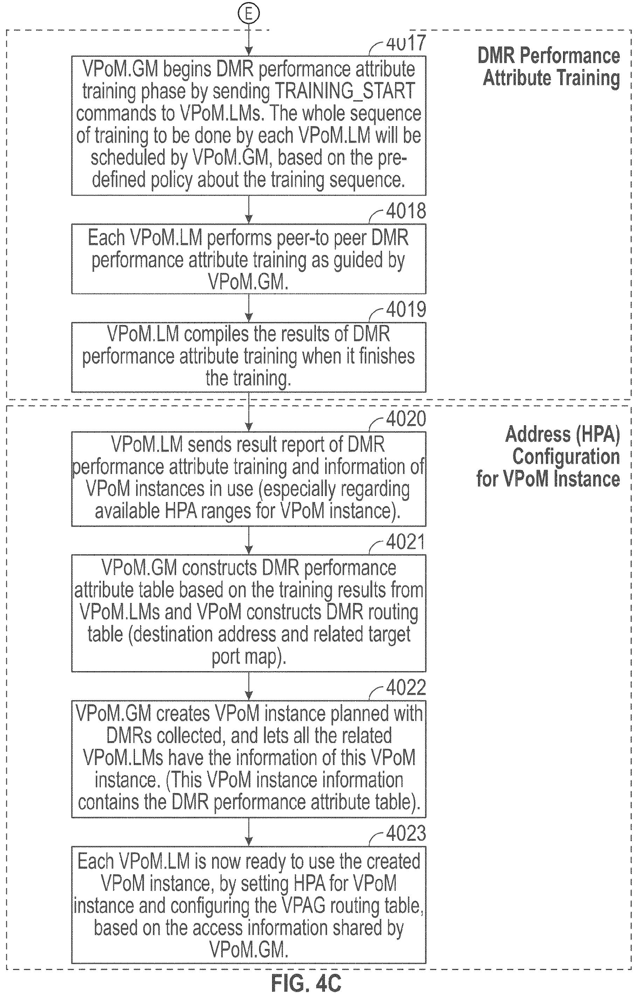

Referring to FIG. 1C, the global manager GM may include the VPoM instance manager IM, which cooperates with the local-memory managers LMM to create, delete, and/or change VPoM instances, as discussed in further detail below with reference to FIG. 4. In summary, the global manager GM may delete or change a given VPoM instance when there are no outstanding memory transactions on the given VPoM instance. When a deletion or change is performed, the global manager GM may notify the deletion or change event to the related (e.g., to the participating) local-memory managers LMM. The local-memory managers LMM may perform corresponding actions guided by the global manager GM.

In some embodiments, the global manager GM (e.g., VPoM.GM) may coordinate all operations of the DMR performance attribute training agent TA (see FIG. 1 B) based on a DMR performance attribute training procedure, which may be defined by an administrator (e.g., by an on-site system administrator), or which may be provided as a default configuration. The coordination may be utilized to avoid any unwanted interference caused by unplanned training traffic.

In some embodiments, the VPoM Instance Information server IIS may communicate with the local-memory managers LMM (e.g., VPoM.LM) to provide VPoM instance access information to each host H.

FIG. 2A is a block diagram depicting a virtual pool-of-memory (VPoM) instance created from donated memory regions (DMR) of the system of FIG. 1A, according to some embodiments of the present disclosure.

Referring to FIG. 2A, a given VPoM (e.g., VPoM instance #1) may be created from one or more DMRs (also referred to as shared memories SM). For example, the VPoM instance #1 may be created from the first shared memory SM1 (e.g., DMR1) of the first host H1, the second shared memory SM2 (e.g., DMR2) of the second host H2, and the third shared memory SM3 (e.g., DMR3) of the third host H3. In this example, the first local memory LM1 of the first host H1 may be partitioned into the first reserved local memory LMB1 (e.g., Mem.1) and the first memory-device local memory LMA1 (e.g., Mem.2). The first memory-device local memory LMA1 may be further partitioned to generate the first shared memory SM1 (e.g., Mem.2b). The remaining portion of the first memory-device local memory LMA1 (e.g., Mem.2a) may be used for one or more different suitable VPoMs.

The second local memory LM2 of the second host H2 may be partitioned into the second reserved local memory LMB2 (e.g., Mem.3) and the second memory-device local memory LMA2 (e.g., Mem.4). The second memory-device local memory LMA2 may be further partitioned to generate the second shared memory SM2 (e.g., Mem.4b). The remaining portion of the second memory-device local memory LMA2 (e.g., Mem.4a) may be used for one or more different suitable VPoMs.

The third local memory LM3 of the third host H3 may be partitioned into the third reserved local memory LMB3 (e.g., Mem.5) and the third memory-device local memory LMA3 (e.g., Mem.6). The third memory-device local memory LMA3 may be further partitioned to generate the third shared memory SM3 (e.g., Mem.6b). The remaining portion of the third memory-device local memory LMA3 (e.g., Mem.6a) may be used for one or more different suitable VPoMs.

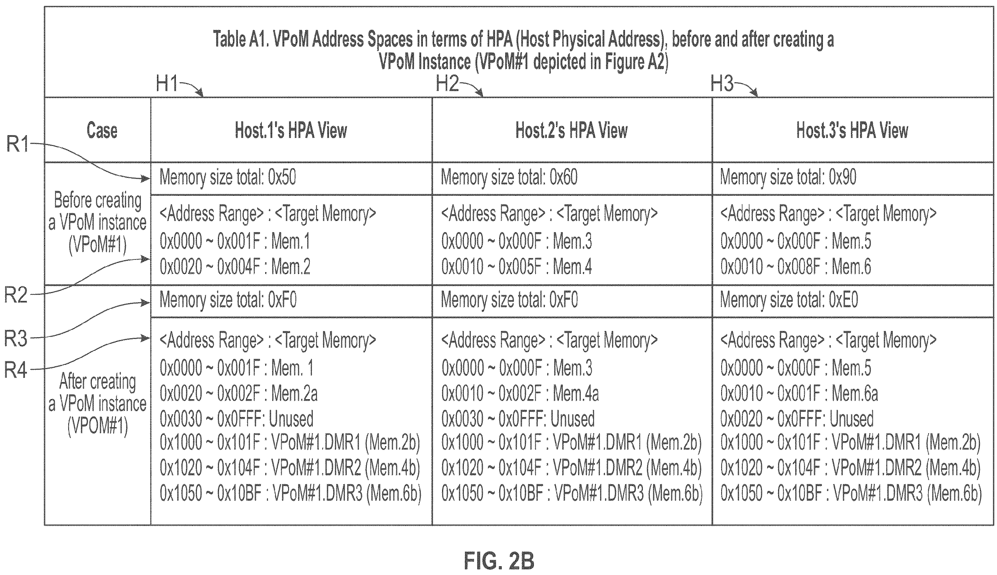

FIG. 2B is a diagram indicating example VPoM address spaces, in terms of host physical addresses (HPA), before and after creating a VPoM instance, according to some embodiments of the present disclosure.

Referring to FIG. 2B, this section describes the structure of the address space used by the VPoM system (e.g., system 1 of FIG. 1), especially how the address space that the hosts H look at varies before and after the VPoM instance is created.

In the example of FIG. 1, Host.1 (the first host H1) has two memory devices MD, the first one is host CPU memory marked as Mem.1 (e.g., LMB1) whose size is 0x20, and the second one is CMM-VPoM memory (e.g., LMA1) marked as Mem.2 whose size is 0x30. So, the Host.1 (the first host H1) has local host physical address (HPA) that ranges from 0x00~0x4F (Mem.1 0x00~0x1F, Mem.2 0x20~0x4F).

Depending on the system, the CXL memory address (e.g., LMA1) may start immediately after the end of the host CPU memory (e.g., LMB1) in the DIMM, or may start from a specified address value. In the former case, a continuous address space encompassing the host CPU memory (e.g., LMB1) and the CXL memory (e.g., LMA1) may be created, and in the latter case, a discontinuous address space in which an unused address range exists between the host CPU memory (LMB1) and the CXL memory address (e.g., of LMA1) may be created. In the example of FIG. 2B, the former situation is assumed.

In some embodiments, the VPoM.LM (e.g., LMM1) in CMM-VPoM.1 (e.g., in MD1) may manage the partitioning of Mem.2 (e.g., LMA1). For example, VPoM.LM (e.g., LMM1) may create two memory partitions of size 0x10 (Mem.2a) and size 0x20 (Mem.2b). VPoM.LM (e.g., LMM1) may determine (e.g., may decide) to donate the second memory partition Mem.2b (e.g., SM1) as a DMR for the VPoM instance, so that partition Mem.2b (e.g., SM1) can be shared with the other hosts (e.g., H2 and H3). Mem.2b (e.g., SM1) may be marked as DMR1.

Likewise, VPoM.LM (e.g., LMM2) of Host.2 (e.g., H2) and the VPoM.LM (e.g., LMM3) of Host.3 (e.g., H3) may do the same thing. Therefore, for Host.2 (e.g., H2), Mem.4b (e.g., SM2), which is the second partition of Mem.4 (e.g., LMA2) (size 0x50) may be donated to the VPoM instance as DMR2. And for Host.3 (e.g., H3), Mem.6b (e.g., SM3), which is the second partition of Mem.6 (e.g., LMA3) (size 0x80) may be donated to the VPoM instance as DMR3.

VPoM.GM (e.g., the global manager GM) may create a VPoM instance of size 0xC0 called VPoM#1 using DMRs such as DMR1 (Mem.2b, size: 0x20), DMR2 (Mem.4b, size: 0x30), and DMR3 (Mem.6b, size: 0x70). Then VPoM.GM (the global manager GM) may provide the information needed to use the VPoM instance to all VPoM.LMs (e.g., all LMM) who participated in creating the VPoM#1. The VPoM.LM (e.g., LMM) in each host H may provide updated CXL memory information to the host H, so that host CPU (e.g., first local processing circuits LPCA) can use the VPoM instance (VPoM#1 in this example).

The differences in address space that the host CPU (e.g., LPCA) sees before and after creating a VPoM instance (VPoM#1) are described in FIG. 2B. For example, a first row R1 refers to host physical address views for the first host H1, the second host H2, and the third host H3, before creating the VPoM instance (VPoM#1). A second row R2 refers to address ranges and target memories for the first host H1, the second host H2, and the third host H3, before creating the VPoM instance (VPoM#1). A third row R3 refers to memory size totals for the first host H1, the second host H2, and the third host H3, after creating the VPoM instance (VPoM#1). A fourth row R4 refers to address ranges and target memories for the first host H1, the second host H2, and the third host H3, after creating the VPoM instance (VPoM#1).

An HPA range for a VPoM may be a reserved address range for VPoM instances. This means there may exist one or multiple VPoM instances in use, then start addresses of all the VPoM instances may be equal to or larger than the lower bound of the HPA range for the VPoM, and end addresses of all the VPoM instances may be equal to or smaller than the upper bound of the HPA range for the VPoM. In some embodiments, each host may not use this HPA range for the VPoM for other uses than VPoM, to make the management of the VPoM system easier. In some embodiments, every new VPoM instance may have a start HPA and an end HPA allocated within this HPA range for VPoM. VPoM.LM (e.g., LMM) and VPoM.GM (e.g., GM) may collaborate to determine (e.g., to decide) the proper start HPA and end HPA of a newly created VPoM instance when they create a new VPoM instance, to avoid an address conflict.

If there is no predefined HPA range for a VPoM definition in each host H, then VPoM.GM (e.g., GM) may provide the HPA range for VPoM information to VPoM.LMs (e.g., to LMM1, LMM2, and/or LMM3) in all hosts (e.g., H1, H2, and/or H3), as a default configuration.

In the example illustrated in FIG. 2B, 0x1000 is the lower bound of HPA range for VPoM. Thus, every host uses 0x1000 as an HPA base to access the VPoM. In this example, the HPA base for VPoM Ox1000 is assumed to be large enough to prevent address conflicts between any local memory devices (including DIMMs, CXL memory devices, and VPoM instances). If it is suitable to create additional VPoM instance to use, then each VPoM.LM (e.g., each LMM) may check the available HPA range for new VPoM instances, and may let VPoM.GM (e.g., GM) know this information. VPoM.GM (e.g., GM) may collect this information that each VPoM.LM (e.g., LMM) shares. After successfully creating the new VPoM, VPoM.GM (e.g., GM) may determine the proper address as a start address.

In this example case, there may be unused memory-address ranges, which the host CPUs cannot access. For example, CPU.1 (e.g., LPCA1) cannot access HPA 0x0030~0x0FFF, CPU.2 (e.g., LPCA2) cannot access HPA 0x0030~0x0FFF, and CPU.3 (e.g., LPCA3) cannot access HPA 0x0020~0x0FFF.

Due to the resource virtualization provided by VPAG (e.g., AG), there may be resources that entities in the opposite resource area cannot see. For example, in FIG. 1, host CPUs such as CPU.1, CPU.2, and CPU.3 cannot see the resources such as PA1, PA2, PA3, VPoM.GM (e.g., GM), and CXL Switch (e.g., SW). What the host CPUs can see are, in the case of Host.1, resources CXL port PB1 (0000:01:00.0), GPU.1 (e.g., LPCB1) (0000:02:00.0), NPU.1 (e.g., LPCC1) (0000:03:00.0), and NIC.1 (e.g., LPCD1) (0000:04:00.0). In the case of Host.2, CPU.2 (e.g., LPCA2) can see CXL port PB2 (0000:01:10.0), GPU.2 (e.g., LPCB2) (0000:02:00.0), and NIC.2 (e.g., LPCD2) (0000:05:00.0). In the case of Host.3, CPU.3 (e.g., LPCA3) can see CXL port PB3 (0000:01:02.0), GPU.3 (e.g., LPCB3) (0000:02:00.0), NPU.2 (e.g., LPCC3) (0000:05:00.0), and NIC.3 (e.g., LPCD3) (0000:06:00.0). This resource isolation may make it easier to manage failures of the DMRs that make up the VPoM instance. However, VPAG (e.g., the AG) having two CXL ports (e.g., PB and PA) can see both resource areas to perform the gateway role.

FIG. 3 is a diagram depicting a VPoM address map table MT with per-DMR performance attributes, according to some embodiments of the present disclosure.

Referring to FIG. 3, VPAG (e.g., AG) may include the map table MT (e.g., a VPoM address map table MT), which includes columns C such as address range (e.g., column C1) (e.g., Ox1000 ~ 0x101F), target interface (e.g., column C2) (e.g., to be forwarded to the local memory controller LMC, or to be forwarded to the egress CXL port (e.g., PA or PB)), DMR identifier (ID) (e.g., column C3), and DMR performance attributes (e.g., columns C4 to C9), which provide latency information (e.g., columns C4, C6, and C8) (e.g., minimum, average, standard deviation, maximum, and some selected tail latencies), and bandwidth information (e.g., columns C5, C7, and C9) (e.g., minimum, average, maximum) for selected memory IO sizes such as 64B, 4KiB, 24KiB, and so on.

In some embodiments, VPAG (e.g., AG) may route memory transaction packets (e.g., data packets DP) to the proper destination using address range and target interface information. VPAG (e.g., AG) may determine the optimal flow rate by considering the latency and bandwidth information given by DMR performance attribute information in the map table MT of FIG. 3.

In some embodiments, DMR performance attribute information may be collected by performing DMR performance parameter training during the phase of VPoM creation. In some embodiments, VPAG (e.g., AG) may provide an interface for a host CPU to access the map table MT so that the operating system running on the host CPU can use the DMR performance attribute information for job scheduling (e.g., for improved job scheduling).

In some embodiments, VPAG (e.g., AG) may construct a VPoM address map table MT with per-DMR performance attributes, based on the information given by VPoM.LM (e.g., LMM), especially from VPoM instance information caching agent ICA (see FIG. 1B).

FIGS. 4A, 4B, and 4C (collectively, FIG. 4) are diagrams depicting a method 4000 for creating a VPoM instance, according to some embodiments of the present disclosure.

Referring to FIG. 4, the method 4000 may include one or more of the following operations. In a VPoM discovery phase, the global manager GM (e.g., VPoM.GM) may collect information for all local-memory mangers LMM (e.g., VPoM.LMs) that exist in the same switch domain (e.g., in the same CXL switch domain) (operation 4001).

In a DMR provisioning for VPoM instance phase, the global manager GM (e.g., VPoM.GM) may define performance attributes (e.g., capacity, bandwidth, and latency targets) of the VPoM instance to create (operation 4002). The global manager GM (e.g., VPoM.GM) may send request messages to the local-memory managers LMM (e.g., VPoM.LMs) asking them to participate in creating the VPoM instance. This request message may include the minimum capacity and bandwidth requirements of a DMR (operation 4003). A local-memory manager LMM (e.g., VPoM.LM) may parse the request message from global manager GM (e.g., VPoM.GM) and may check the capacity and bandwidth targets (e.g., specifications) of the DMR (operation 4004). If there is any pre-configured DMR that satisfies the targets, then the local-memory manager LMM (VPoM.LM) may select that DMR (e.g., to be a shared memory SM for the VPoM instance) (operation 4005 "Yes"). If there is no such DMR (operation 4005 "No") and if the current memory resource status permits (operation 4006 "Yes"), then the local-memory manager LMM (e.g., VPoM.LM) may create a new DMR that can satisfy the requirements (operation 4008). The local-memory manager LMM (e.g., VPoM.LM) may send a response message of 'Participation: Yes' with the information about DMR, to the global manager GM (e.g., VPoM.GM) (operation 4009). If it is not possible to participate with the proper DMR (operation 4006 "No"), then local-memory manager LMM (e.g., VPoM.LM) may send a response message of 'Participation: No' to the global manager GM (e.g., VPoM.GM) (operation 4007).

For each response message from local-memory manager LMM (VPoM.LM), the global manager GM (e.g., VPoM.GM) may parse it and determine whether a current set of DMRs collected so far is sufficient to create the VPoM instance planned (operation 4010). If the current set of DMRs gathered is sufficient to create the VPoM instance planned (operation 4011 "Yes"), or if the maximum waiting time has passed (operation 4012 "Yes"), then the global manager GM (e.g., VPoM.GM) may stop waiting for response messages from local-memory managers LMM (VPoM.LMs) (operation 4013). The global manager GM (e.g., VPoM.GM) may review whether it can create the VPoM instance based on response messages from the local-memory managers LMM (e.g., the VPoM.LMs) so far (operation 4014).

If the global manager GM cannot make the VPoM instance planned with the DMRs collected (operation 4015 "No"), then each related LMM (e.g., VPoM.LM) may withdraw the DMR provisioning (operation 4016). If the global manager GM (e.g., VPoM.GM) can make the VPoM instance planned with the DMRs collected (operation 4015 "Yes"), then the global manager GM (e.g., VPoM.GM) may begin a DMR performance attribute training phase, based on a pre-defined policy regarding the training sequence (operation 4017).

Each local-memory manager LMM (e.g., VPoM.LM) may perform peer-to-peer DMR performance attribute training, as guided by the global manager GM (e.g., VPoM.GM) (operation 4018). For example, as discussed above, a training agent TA associated with the LMM may perform testing to evaluate characteristics of remote memory (e.g., remote DMRs of a target VPoM instance). When all the training sequences are completed (operation 4019), then each local-memory manager LMM (e.g., VPoM.LM) may report the DMR performance attribute training results to global manager GM (e.g., VPoM.GM) (operation 4020) to begin an HPA configuration for the VPoM instance phase.

The global manager GM (e.g., VPoM.GM) may construct a DMR performance attribute table based on the training results from local-memory managers LMM (e.g., VPoM.LMs) (operation 4021). The global manager GM (e.g., VPoM.GM) may create the planned (e.g., target) VPoM instance with the DMRs collected and may let all the related local-memory managers LMM (e.g., VPoM.LMs) have the information of the VPoM instance (operation 4022). The VPoM instance information may include the DMR performance attribute table (e.g., the map table MT of FIG. 3). Each local-memory manager LMM (e.g., VPoM.LM) may now be ready to use the created VPoM instance, based on the access information shared by global manager GM (e.g., VPoM.GM).

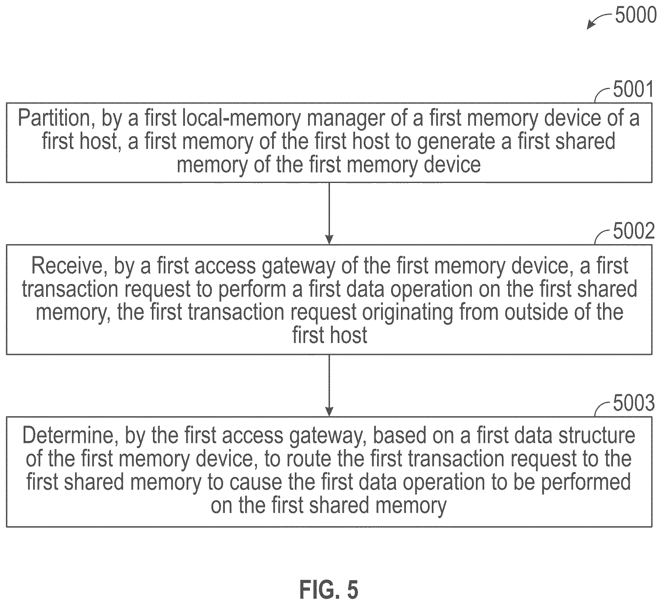

FIG. 5 is a diagram depicting a method 5000 for providing a memory pool, according to some embodiments of the present disclosure.

Referring to FIG. 5, the method 5000 may include one or more of the following operations. A given local-memory manager LMM (see, e.g., FIGS. 1A and 2A and their corresponding disclosures above) may partition a given memory device MD (e.g., MD1) of a given host H (e.g., H1) to generate a given shared memory SM, which may also be referred to as a donated memory region (e.g., SM1) (operation 5001). A given access gateway AG (e.g., AG1) may receive a transaction request TR (e.g., TR1) to perform a data operation on the given shared memory SM (e.g., SM1) (operation 5002). The given transaction request TR (e.g., TR1) may originate from outside of the given host H (e.g., H1). For example, the transaction request TR may originate from a different given host H (e.g., H2). The given access gateway AG (e.g., AG1) may determine, based on a first data structure DS (e.g., DS1, which may include a routing table RT such as in FIG. 1B), to route the transaction request TR to the given shared memory SM (e.g., SM1) to cause the first data operation to be performed on the given shared memory (e.g., SM1) (operation 5003). For example, the given access gateway AG may determine to route the first data operation to the shared memory (e.g., SM1), which may cause the first data operation to be performed on the shared memory (e.g., SM1). In some embodiments, the access gateway AG may perform the first data operation on the shared memory (e.g., SM1).

Accordingly, aspects of some embodiments of the present disclosure may provide improvements to providing memory pools by providing an architecture for more consistent memory bandwidth and lower latency compared to other approaches, such as approaches using centralized and physical memory pools (e.g., physical CXL memory pools).

Example embodiments of the disclosure may extend to the following statements, without limitation:
Statement 1. An example method includes dividing, by a first local-memory manager of a first memory device of a first host, a first memory of the first host to generate a first shared memory of the first memory device, receiving, by a first access gateway of the first memory device, a first transaction request to perform a first data operation on the first shared memory, the first transaction request from outside of the first host, and determining, by the first access gateway, based on a first data structure of the first memory device, to route the first transaction request to the first shared memory.
Statement 2. An example method includes the method of statement 1, wherein the first data structure includes a memory routing table including shared-memory location information indicating a first location within the first shared memory corresponding to the first transaction request.
Statement 3. An example method includes the method of any of statements 1 and 2, and further includes generating, by the first local-memory manager, first shared-memory information indicating one or more performance attributes of the first shared memory.
Statement 4. An example method includes the method of any of statements 1-3, and further includes creating, by a global manager communicatively connected to the first access gateway and to a second access gateway of a second memory device associated with a second host, the first memory group, the first memory group including the first shared memory and a second shared memory of the second memory device.
Statement 5. An example method includes the method of any of statements 1-4, wherein a global manager is configured to create the first memory group based on one or more performance attributes of the first shared memory or based on one or more performance attributes of a second shared memory.
Statement 6. An example method includes the method of any of statements 1-5, wherein the first local-memory manager is configured to determine one or more performance attributes of the first shared memory and to determine one or more performance attributes of a second shared memory of a second memory device of a second host, and store the one or more performance attributes of the first shared memory and the one or more performance attributes of the second shared memory in a second data structure.
Statement 7. An example method includes the method of any of statements 1-6, wherein the first transaction request is configured to operate using an interconnect protocol.
Statement 8. An example method includes the method of any of statements 1-7, wherein the first access gateway includes a first port configured to receive the first transaction request, and a second port configured to receive a second transaction request from the first host.
Statement 9. An example method includes the method of statement 8, wherein the first port is configured to receive a first participation request to provide the first shared memory to the first memory group.
Statement 10. An example system for performing the method of any of statements 1-9 includes the first memory device associated with the first host, the first memory device including the first memory, at least a first portion of the first memory being the first shared memory, the first local-memory manager configured to manage the first shared memory, and the first access gateway of the first memory device, and the first access gateway.

While embodiments of the present disclosure have been particularly shown and described with reference to the embodiments described herein, it will be understood by those of ordinary skill in the art that various changes in form and details may be made therein without departing from the scope of the present disclosure as set forth in the following claims.

## Claims

1. A system for providing a first memory group, the system comprising:
a first memory device (MD1) associated with a first host (H1), the first memory device (MD1) comprising:
a first memory (LM1), at least a first portion of the first memory (LM1) being a first shared memory (LMA1) that is configured to receive a first transaction request associated with a first data operation, the first transaction request from outside of the first host (H1);
a first local-memory manager (LMM1) configured to manage the first shared memory (LMA1); and
a first access gateway (AG1) of the first memory device (MD1), the first access gateway (AG1) configured to determine, based on a first data structure of the first memory device (MD1), to route the first transaction request to the first shared memory (LMA1).

2. The system of claim 1, wherein the first data structure comprises a memory routing table comprising shared-memory location information indicating a first location within the first shared memory (LMA1) corresponding to the first transaction request.

3. The system of claim 1 or 2, wherein the first local-memory manager (LMM1) manages the first shared memory (LMA1) by:
dividing the first memory (LM1) to generate the first shared memory (LMA1); and
generating first shared-memory information indicating one or more performance attributes of the first shared memory.

4. The system of any one of claims 1 to 3, further comprising:
a global manager (GM) communicatively connected to the first access gateway (AG1) and to a second access gateway (AG2) of a second memory device (MD2) associated with a second host (H2),
wherein the global manager (GM) is configured to create the first memory group comprising the first shared memory (LMA1) and a second shared memory (LMA2) of the second memory device (MD2).

5. The system of any one of claims 1 to 3, wherein a global manager (GM) is configured to create the first memory group based on one or more performance attributes of the first shared memory (LMA1) or based on one or more performance attributes of a second shared memory (LMA2).

6. The system of any one of claims 1 to 3, wherein the first local-memory manager (LMM1) is configured to:
determine one or more performance attributes of the first shared memory (LMA1) and to determine one or more performance attributes of a second shared memory (LMA2) of a second memory device (MD2) of a second host (H2); and
store the one or more performance attributes of the first shared memory (LMA1) and the one or more performance attributes of the second shared memory (LMA2) in a second data structure on the first memory device (MD1).

7. The system of any one of claims 1 to 6, wherein the first transaction request is configured to operate using an interconnect protocol.

8. The system of any one of claims 1 to 7, wherein the first access gateway (AG1) comprises:
a first port (PA) configured to receive the first transaction request; and
a second port (PB) configured to receive a second transaction request.

9. The system of claim 8, wherein the first port (PA) is configured to receive a first participation request to provide the first shared memory (LMA1) to the first memory group.

10. A method for providing a first memory group, the method comprising:
dividing (5001), by a first local-memory manager (LMM1) of a first memory device (MD1) of a first host (H1), a first memory (LM1) of the first host (H1) to generate a first shared memory (LMA1) of the first memory device (MD1);
receiving (5002), by a first access gateway (AG1) of the first memory device (MD1), a first transaction request to perform a first data operation on the first shared memory (LMA1), the first transaction request from outside of the first host (H1); and
determining (5003), by the first access gateway (AG1), based on a first data structure of the first memory device (MD1), to route the first transaction request to the first shared memory (LMA1).

11. The method of claim 10, wherein the first data structure comprises a memory routing table comprising shared-memory location information indicating a first location within the first shared memory (LMA1) corresponding to the first transaction request.

12. The method of claim 10 or 11, further comprising generating, by the first local-memory manager (LMM1), first shared-memory information indicating one or more performance attributes of the first shared memory (LMA1).

13. The method of any one of claims 10 to 12, further comprising:
creating, by a global manager (GM) communicatively connected to the first access gateway (AG1) and to a second access gateway (AG2) of a second memory device (MD2) associated with a second host (H2), the first memory group,
the first memory group comprising the first shared memory (LMA1) and a second shared memory (LMA2) of the second memory device (MD2).

14. The method of any one of claims 10 to 12, wherein a global manager (GM) is configured to create the first memory group based on one or more performance attributes of the first shared memory (LMA1) or based on one or more performance attributes of a second shared memory (LMA2).

15. The method of any one of claims 10 to 12, wherein the first local-memory manager (LMM1) is configured to:
determine one or more performance attributes of the first shared memory (LMA1) and to determine one or more performance attributes of a second shared memory (LMA2) of a second memory device (MD2) of a second host (H2); and
store the one or more performance attributes of the first shared memory (LMA 1) and the one or more performance attributes of the second shared memory (LMA2) in a second data structure.
